# EUROPEAN PATENT SPECIFICATION

(11) **EP 2 103 513 B1**
(45) Date of publication and mention of the grant of the patent: **21.07.2010**
(21) Application number: 09000162.9
(22) Date of filing: 08.01.2009
(51) Int. Cl.: B62M 17/00

(54) **Motorcycle**
Motorrad
Motocyclette

(30) Priority: 18.03.2008 JP 2008070236
(43) Date of publication of application: 23.09.2009
(73) Proprietor: Honda Motor Co., Ltd., Minato-ku Tokyo 107-8556 (JP)
(72) Inventor: Nimura, Taisuke c/o Honda R&D Co., Ltd., Saitama 351-0193 (JP); Sakai, Kiyotaka c/o Honda R&D Co., Ltd., Saitama 351-0193 (JP); Kofuji, Kenji c/o Honda R&D Co., Ltd., Saitama 351-0193 (JP); Shiomi, Yoshinobu c/o Honda R&D Co., Ltd., Saitama 351-0193 (JP); Toyoda, Hidetoshi c/o Honda R&D Co., Ltd., Saitama 351-0193 (JP); Higashi, Yasuhiro c/o Honda R&D Co., Ltd., Saitama 351-0193 (JP)
(74) Representative: Liska, Horst

(56) References cited:
- EP-A- 1 978 215
- WO-A-03/093096
- US-A- 4 811 810
- US-A- 4 953 656
- US-A1- 2002 027 034

## Description

### Technical Field

The present invention relates a motorcycle according to the preamble of claim 1, in which a final gear transmission mechanism is interposed between a drive shaft and a rear wheel.

### Background Art

A motorcycle according to the preamble of claim 1 is known from WO 03/093096 A.

There is known a further motorcycle in which a final gear transmission mechanism for transmitting the rotational drive force of an engine is interposed between a drive shaft and a rear wheel (see e.g. Japanese Utility Model publication No. 2-393).

In Japanese Utility Model publication No. 2-393, the final gear transmission mechanism includes a pinion gear 3 (the reference numeral in this publication is diverted. This applies to the following.), a ring gear 4 meshed with the pinion gear 3, a cylindrical sleeve attached with the ring gear 4 and provided for rotation around a rear axle 24, and a rear wheel 6 integrally joined to the sleeve. The drive force of the pinion gear 3 is transmitted to the rear wheel 6.

Incidentally, in the technique of Japanese Utility Model publication No. 2-393, the sleeve attached with the ring gear 4 is inserted into the rear axle 24 in the axial direction thereof toward the rear wheel 6. The sleeve is a member permitted to slightly move in the axial direction of the rear axle 24.

If the sleeve is axially movable, the ring gear 4 integrally attached to the sleeve is axially moved along with the movement of the sleeve. This varies the meshing state between the ring gear 4 and the pinion gear 3, which may probably cause e.g. gear noise. In other words, the final gear transmission mechanism has room for improvement.

### Problem to be Solved by the Invention

It is an object of the present invention to provide a technology for increasing fastening rigidity of a rear axle attached with a ring gear to stabilize the meshing state between a ring gear and a pinion gear meshed with the ring gear in a motorcycle including a final gear transmission mechanism disposed.

### Means for Solving the Problem

This object is achieved by a motorcycle according to claim 1.

According to claim 1, in a motorcycle in which a swing arm is swingably mounted to a pivot shaft provided in a body frame, a rear wheel is mounted to a leading end of the swing arm, a drive shaft for transmitting rotational drive force of an engine is housed in the swing arm and a final gear transmission mechanism for transmitting the rotational drive force of the engine is interposed between the drive shaft and the rear wheel, the final gear transmission mechanism includes: a gear case mounted to the leading end of the swing arm for supporting the rear axle to transmit the rotational drive force of the engine to the rear wheel; a one-end bearing and the other-end bearing attached to the gear case to support one end and the other end, respectively, of the rear axle; a ring gear mounted to the rear axle to transmit the rotational drive force of the engine to the rear axle; a holding portion attached to the gear case to hold the one end of the rear axle via the one-end bearing in an axial direction of the rear axle; and a fastening member for fastening the other end of the rear axle via the other-end bearing from the outside of the gear case; and in that the other-end bearing includes an inner race and an outer race and the inner race is fastened to the rear axle by the fastening member.

Moreover, according to claim 1, a brake disk is attached to the one end of the rear axle in such a manner as to be gripped by the one end of the rear axle and the rear wheel.

A preferred embodiment of the invention recited in claim 2 is **characterized in that** the gear case is provided with the other-end holding portion for holding the other end of the rear axle via the other-end bearing in the axial direction of the rear axle and a lateral surface of the outer race is abutted against the other-end bearing.

### Effect of the Invention

In the invention according to claim 1, the final gear transmission mechanism includes the one-end holding portion for holding the one end of the rear axle attached with the ring gear via the one-end bearing in the axial direction of the rear axle and the fastening member for fastening the other end of the rear axle via the other-end bearing from the outside of the gear case.

The one end of the rear axle is held by the one-end holding portion and the inner race is fastened to the rear axle by the fastening member so that the rear axle may not axially be movable. Therefore, the rear axle can be held by the gear case not to be axially movable. As a result, the axial movement of the ring gear provided at the rear axle can be suppressed.

If the axial movement of the ring gear is suppressed, the meshing state between the ring gear and the pinion gear provided close to the drive gear to be meshed therewith can be stabilized. If the meshing state is stabilized, drive torque becomes less variable, which allows for stable transmission of the drive force. In addition, gear noise with respect to the transmission of the rotational drive force can be reduced.

Moreover, according to claim 1, the brake disk is attached so as to be gripped by the rear axle and the rear wheel.

When the rear wheel is attached to the axle, the brake disk is locked, the rear wheel is abutted against the brake disk, and both can be co-fastened to each other. Since the brake disk is co-fastened to the rear wheel, a fastening member exclusively for securing the brake disk is eliminated. Since the dedicated fastening member is eliminated, assembly man-hours can be reduced.

According to the preferred embodiment of the invention recited in claim 2, the gear case is provided with the other-end holding portion for holding the other end of the rear axle via the other-end bearing in the axial direction of the rear axle and the lateral surface of the outer race is abutted against the other-end holding portion.

In addition to the one-end bearing, the lateral surface of the outer race of the other-end bearing is held by the other-end holding portion provided on the gear case. Therefore, the fastening rigidity in the axial direction of the rear axle can further be increased.

### Brief Description of the Drawings

Fig. 1 is a left lateral view of a motorcycle according to the present invention.
Fig. 2 is a lateral view of a rear portion of the motorcycle according to the present invention.
Fig. 3 is a cross-sectional view at a line 3-3 of a motorcycle according to Fig. 2.
Fig. 4 illustrates an embodiment of a final gear transmission mechanism according to the present invention and a comparative example.

### Best Mode for Carrying Out the Invention

The best mode for carrying out the invention will hereinafter be described with reference to the accompanying drawings. It is to be noted that the drawings should be viewed based on the orientation of reference symbols.

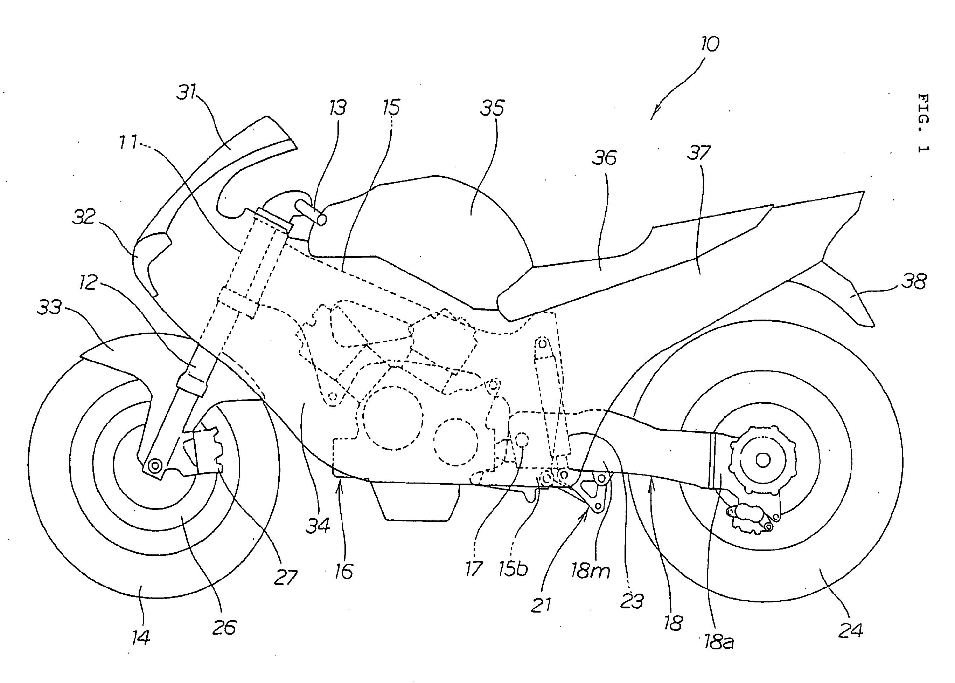

Fig. 1 is a left lateral view of a motorcycle according to the present invention. A motorcycle 10 includes main components as follows: a head pipe 11; a front fork 12 steerably mounted to the head pipe 11; a steering handlebar 13 and a front wheel 14 mounted to an upper end and lower end, respectively, of the front fork 12; a body frame 15 mounted to the head pipe 11 and extended rearward; an engine 16 as a drive source suspended by the body frame 15; a swing arm 18 attached to the rear end of the body frame 15 so as to be rearward swingable with a pivot shaft 17 serving as a fulcrum; a rear cushion 23 attached via a link 21 to between an intermediate portion 18m of the swing arm 18 and a rear portion 15b of the body frame 15; and a rear wheel 24 attached to a leading end 18a of the swing arm 18 and driven by the engine 16.

A disk-like front brake disk 26 is attached to the front wheel 14. A front disk brake unit 27 for braking the front wheel 14 is attached to the lower portion of the front fork 12 so as to be able to grip the front brake disk 26.

In the figure, reference numeral 31 denotes an upper cowl, 32 denotes a headlamp, 33 denotes a front fender, 34 denotes a main cowl, 35 denotes a fuel tank, 36 an occupant seat, 37 denotes a seat cowl, and 38 denotes a rear fender.

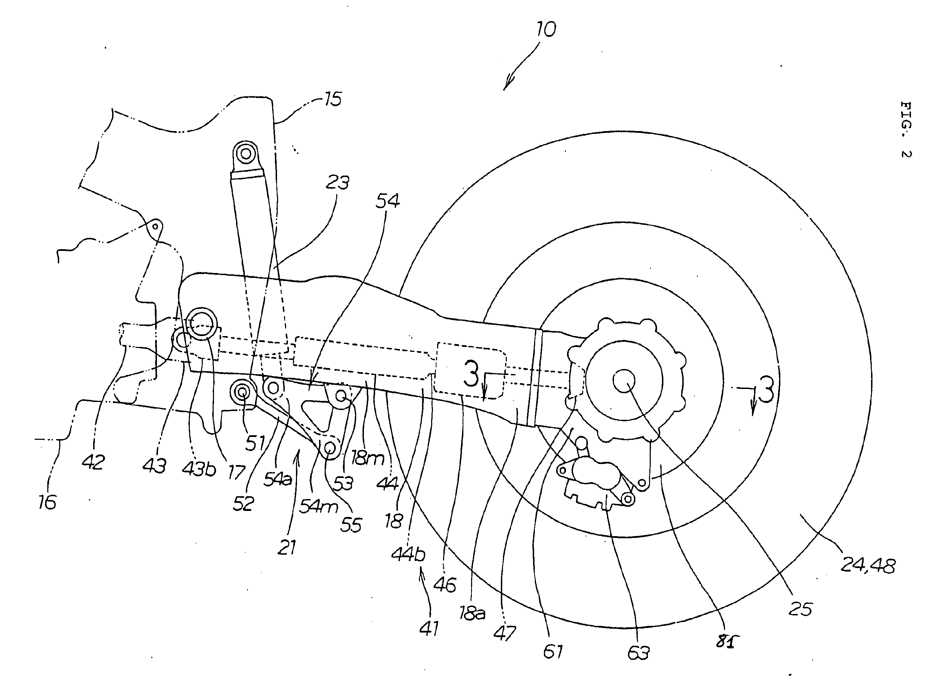

Fig. 2 is a lateral view of a rear portion of the motorcycle according to the present invention. The motorcycle 10 includes the body frame 15; the engine 16 suspended by the body frame 15; the pivot shaft 17 provided at the rear portion of the body frame 15; the swing arm 18 swingably provided on the pivot shaft 17; the rear wheel 24 rotatably supported via the rear axle 25 by a rear portion as the leading end 18a of the swing arm 18; and the rear cushion 23 interposed between the swing arm 18 and the body frame 15.

The rear wheel drive mechanism 41 includes a universal joint 43 coupled to an output shaft 42 of the engine 16 to transmit a drive force; a drive shaft 44 coupled to a rear end 43b of the universal joint to transmit the drive force of the engine 16; a shaft-length variable mechanism 46 coupled to the rear end 44b of the drive shaft 44 to make the shaft-length of the drive shaft variable; and a pinion gear 47 coupled to the shaft-length variable mechanism 46 to change the direction of the drive force and transmit it to the rear axle 25.

In the present embodiment, the shaft-length variable mechanism 46 uses a tripod constant-velocity joint but is not limited to this. The shaft-length variable mechanism 46 may use a ball-spline sliding joint, a cross-groove joint or the like. As long as the joints have a sliding function, its configuration is not restrictive.

With reference to Figs. 1 and 2, the motorcycle 10 includes the swing arm 18 swingably provided on the body frame 15 via the pivot shaft 17; and the rear wheel 24 as a drive wheel 48 rotatably supported by the swing arm 18 and rotated by the drive shaft 44 transmitting the drive force of the engine 16. The drive force is transmitted from the engine 16 to the rear wheel 24 via the drive shaft 44 and via the universal joint 43. The drive shaft 44 is disposed inside the drive arm 18.

The link 21 provided on the swing arm 18 includes a first arm member 52, a second arm member 54, a rear cushion 23, and a third swing shaft 55. The first arm member 52 is swingably provided to extend rearward from the body frame 15 via the first swing shaft 51. The second arm member 54 is swingably provided to extend forward from the intermediate portion 18m of the swing arm 18 via a second swing shaft 53. The rear cushion 23 is interposed between a leading end 54a of the second arm member 54 and the body frame 15. The third swing shaft 55 swingably attaches the leading end of the first arm member 52 to the intermediate portion 54m of the second arm member 54. The rear cushion 23 is adapted to absorb vibration or the like applied to the swing arm 18.

A gear case 61 is disposed at the leading end 18a of the swing arm to house the rear axle 25 and drive train parts on the peripheries thereof. Reference numeral 81 denotes a rear brake disk and 63 denotes a rear disk brake unit.

In short, the motorcycle 10 is a vehicle in which the swing arm 18 is swingably attached to the pivot shaft 17 provided in the body frame 15, the rear wheel 24 is mounted to the leading end 18a of the swing arm 18, the drive shaft 44 for transmitting the rotational drive force of the engine 16 is housed in the swing arm 18, and the final gear transmission mechanism including the rear wheel drive mechanism 41 for transmitting the rotational drive force of the engine 16 is interposed between the drive shaft 44 and the rear 24. The final gear transmission mechanism is described with reference to the following drawing.

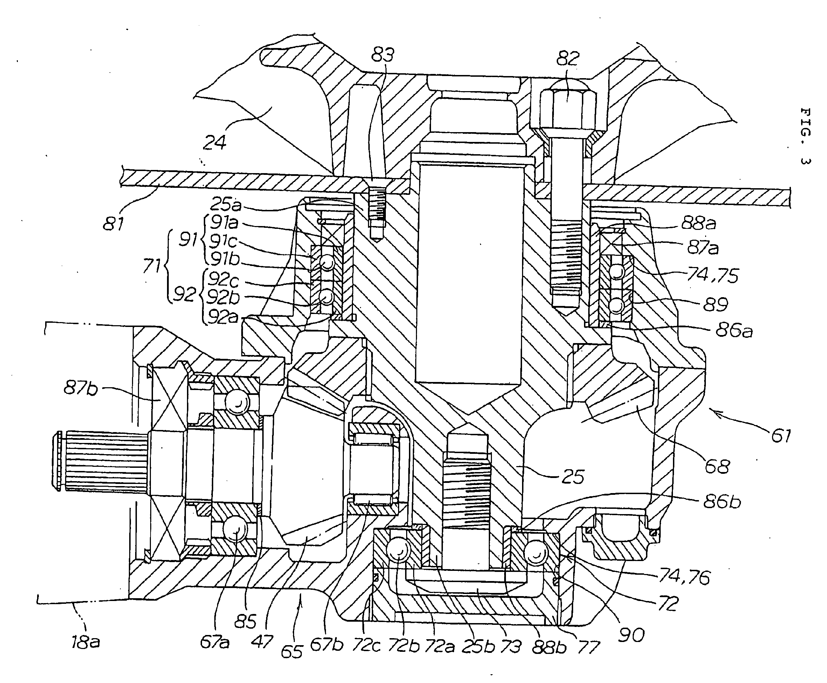

Fig. 3 is a cross-sectional view taken along line 3-3 of Fig. 2, for assistance in explaining the final gear transmission mechanism 65 disposed at the leading end 18a of the swing arm 18.

The final gear transmission mechanism 65 includes main constituent elements as follows: the gear case 61 mounted to the leading end 18a of the swing arm 18; bearings 67a, 67b disposed at the front portion of the gear case 61; the pinion gear 47 as a drive-side gear carried by the bearings 67a, 67a; a ring gear 68 as a driven-side gear disposed perpendicularly to and meshed with the pinion gear 47 to receive drive force transmitted thereto; the rear axle 25 as a drive force transmission shaft attached with the ring gear 68 via a spline portion; a one-end bearing 71 supporting one end 25a of the rear axle 25; the other-end bearing 72 supporting an other end 25b of the rear axle 25 disposed outwardly of the vehicle with respect to the one end 25a; and a fastening member 73 fastening between an inner race 72a of the other-end bearing 72 and the rear axle 25 from the outside of the vehicle. Reference numeral 77 denotes a cap attached to the gear case 61 to cover the head of the fastening member 73.

The bearings supporting the rear axle 25 is hereinafter described in detail.

The one-end and other-end bearings 71, 72 supporting the rear axle 25 use a radial ball bearing. The radial ball bearing is composed of an inner race, a plurality of balls disposed on the outer circumference of the inner race, and an outer race disposed outward of the balls.

Specifically, the one-end bearing 71 is composed of a first bearing 91 and a second bearing 92 axially juxtaposed to each other. The first bearing 91 is composed of an inner race 91a, balls 91 b and an outer race 91 c. The second bearing 92 is composed of an inner race 92a, balls 92b, and outer races 92c.

The other-end bearing 72 is composed of an inner race 72a, balls 72b and an outer race 72c.

The one end 25a of the rear axle 25 is provided with a one-end holding portion 75 as a holding portion 74 capable of holding the rear axle 25 via the one-end bearing 71 in the axial direction and inwardly of the vehicle.

The other-end 25b of the rear axle 25 is provided with the other-end holding portion 76 as a holding portion 74 for holding the rear axle 25 via the other-end bearing 72 in the axial direction and inwardly of the vehicle, and with a fastening member 73 for fastening the other-end bearing 72 from the outside of the gear case 61.

The fastening member 73 fastens the inner race 72a of the other-end bearing 72 to the rear axle 25 to restrict the axial movement of the rear axle 25.

The gear case 61 is provided with the holding portion 74 for restricting the axial movement of the bearing. This holding portion 74 includes a one-end holding portion 75 axially holding an outer race 91c of the first bearing as a constituent element of the one-end bearing 71; and the other-end holding portion 76 axially holding an outer race 72c of the other-end bearing.

A lateral surface of the outer race 71c of the one-end bearing 71 and a lateral surface of the outer race 72c of the other-end bearing 72 are held by the one-end holding portion 75 and the other-end holding portion 76, respectively. In addition, a lateral surface of the inner race 72a of the other-end bearing 72 is fastened to the rear axle 25 by the fastening member 73.

The gear case 61 is provided with the other-end holding portion 76 for holding the other end 25b of the rear axle 25 via the other-end bearing 72 in the axial direction of the rear axle 25. In addition, the lateral surface of the outer race 72c is abutted against the other-end holding portion 76.

In addition to the one-end bearing 71, the lateral surface of the outer race 72c of the other-end bearing 72 is held by the other-end holding portion 76 provided on the gear case 61. Therefore, the fastening rigidity can further be increased in the axial direction of the rear axle 25.

A radial ball bearing is applied to the one bearing 76a supporting the shaft of the pinion gear and a needle bearing is applied to the other bearing 76b.

In the figure, reference numeral 85 denotes a pinion gear position adjusting shim, 86a and 86b denote rear axle position adjusting shims, 87a and 87b denote seal members, and 88a and 88b denote collar members interposed between the rear axle and the bearing. In addition, reference numeral 89 denotes a one-end outer circumference holding surface for holding the outer circumferential surface of the outer race of the one-end bearing provided on the gear case 61, and 90 denotes the other-end outer circumference holding surface provided on the gear case 61 to hold the outer circumferential surface of the outer race of the one-end bearing provided on the gear case 61.

The one-end bearing 71 is a bearing closer to the ring gear 68. As described above, the first and second bearings 91, 92 are juxtaposed to each other from the inside to outside of the vehicle. The lateral surface of the outer race 91 c of the first bearing 91 is held by the one-end holding portion 75 mentioned above provided perpendicularly to the rear axle 25.

The other-end bearing 72 is a bearing closer to the fastening member 73. The lateral surface of the inner race 72a of the other-end bearing 72 is fastened to the rear axle 25 by the fastening member 73. Specifically, the other-end bearing 72 is such that the inner race 72a is fastened to the rear axle 25 by the fastening member 73.

As described above, the one end 25a of the rear axle 25 is held by the one-end holding portion 75 via the one-end bearing 71 and the other end 25b of the rear axle 25 is held by the fastening member 73 via the other-end bearing 72. This configuration can increase the fastening rigidity of the rear axle 25 and provide satisfactory assembly performance without impairing workability with respect to the assembly of the rear axle.

Usually, the other-end bearing 72 is protected by the cap 77 from disturbance. In addition, when the rear axle 25 is maintained, the cap 77 is removed, the fastening member 73 is removed, the other-bearing 72 is removed, the gear case 61 is opened and the rear axle 25 is removed. Thus, it is not needed to worry about impairing the maintenance performance of the rear axle 25.

A description is hereinafter given of the attachment structure of the brake disk.

A brake disk 81 is attached to the one end 25a of the rear axle 25 and disposed to be gripped by the one end 25a of the rear axle 25 and the rear wheel 24. More specifically, the rear wheel 24 is fastened to the rear axle 25 via a rear wheel attachment bolt 82. The brake disk 81 is co-fastened to the rear wheel 24. Reference numeral 83 denotes a small bolt provided to temporarily lock the brake disk 81 to the rear axle 25 in advance, before the rear wheel 24 is attached.

Since the brake disk 81 is attached to be gripped by the rear axle 25 and the rear wheel 24, when the rear axle 25 is attached to the rear wheel 24, the brake disk 81 is locked and the rear wheel 24 is abutted against the brake disk 81 for co-fastening. Since the brake disk 81 is co-fastened to the rear wheel 24, a fastening member exclusively for securing the brake disk 81 is eliminated to reduce assembly man-hours.

A description is next given of the operation of the motorcycle having the final gear transmission mechanism as described above.

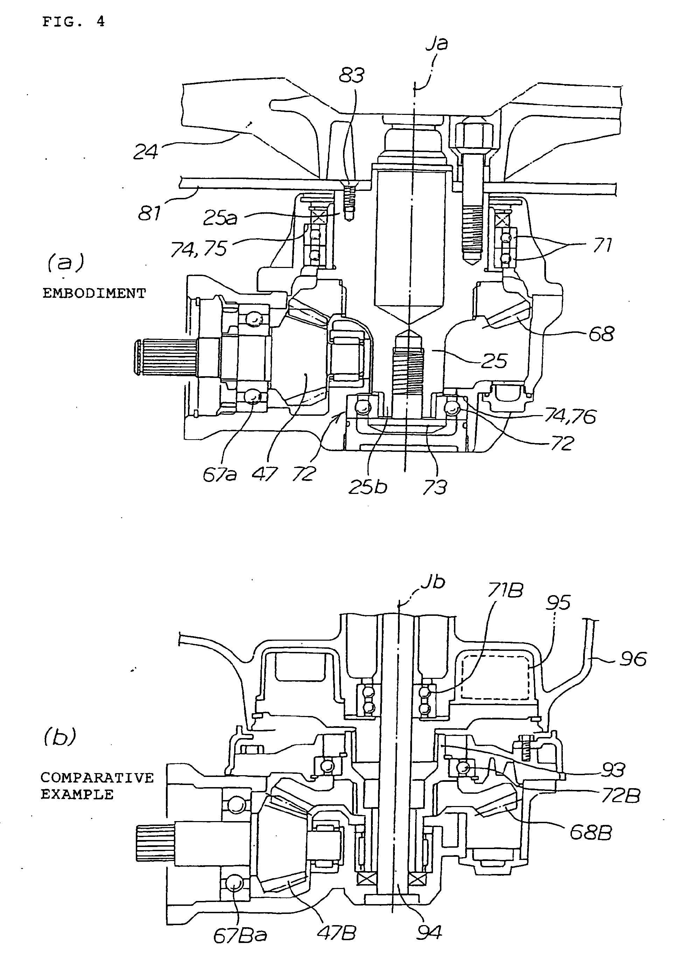

Fig. 4 illustrates an embodiment of the final gear transmission mechanism according to the present invention and a comparative example. Fig. 4(a) illustrates the embodiment. The rear axle 25 can be held by the one-end holding portion 75 and the fastening member 73 not to be movable in the axial direction Ja of the rear axle 25. Therefore, the fastening rigidity of the rear axle 25 attached with the ring gear 68 can significantly be increased.

In Fig. 4(b), a cylindrical ring gear shaft 93 corresponding to a rear axle 25B attached with a ring gear 68B is insertably fitted to an axial member 94 as a fixed shaft. In addition, the ring gear shaft 93 is disposed on the side of a wheel and held only by the side of a damper holder 96 having a damper member 95. In other words, the gear shaft 93 is not provided with a member for restricting the movement of an axial Jb direction from the outside of a vehicle. Thus, torque variations and/or velocity variations may probably cause the meshing state between the ring gear 68B and a pinion gear 47B to be easily variable. If the meshing state varies, for example, gear noise or the like occurs in some cases.

Returning again to Fig. 4(a), the final gear transmission mechanism 65 includes the one-end holding portion 75 for holding the one-end 25a of the rear axle 25 attached with the ring gear 68 via the one-end bearings 71 in the axial direction of the rear axle 25; and the fastening member 73 for fastening the other-end bearing 72 to the other end 25b of the axle 25 from the outside of the gear case 61.

Since the one end 25a of the rear axle is held by the one-end holding portion 75 and the other end 25b of the rear axle is fastened by the fastening member 73, the rear axle 25 can be held not to be movable in the axial Ja direction. The fastening rigidity of the rear axle 25 attached with the ring gear 68 can significantly be increased.

Since the ring gear 68 is a member for transmitting the rotational drive force of the engine 16 to the rear axle 25, it is subjected to large force. Since the fastening rigidity of the rear axle 25 attached with the ring gear 68 is increased, the axially Ja directional movement of the ring gear 68 can be suppressed. If the axially Ja directional movement of the ring gear 68 can be suppressed, the meshing state between the ring gear 68 and the pinion gear 47 disposed closed to the drive shaft 44 to be meshed therewith becomes less variable. If the variation of the meshing state becomes hard to occur, the variation in drive torque becomes less variable, which allows for stable transmission of the drive force. In addition, gear noise with respect to the transmission of the rotational drive force can be reduced.

### Industrial Applicability

The present invention is suitable for motorcycles having a final gear transmission mechanism.

The invention is directed to provide a technology for increasing fastening rigidity of a rear axle attached with a ring gear to stabilize the meshing state between a ring gear and a pinion gear meshed with the ring gear in a motorcycle including a final gear transmission mechanism disposed therein.

A final gear transmission mechanism 65 includes: a gear case 61 mounted to a leading end 18a of a swing arm 18 to support a rear axle 25; a one-end bearing 71 and the other-end bearing 72 for supporting one end 25a and the other end 25b, respectively, of the rear axle 25; a ring gear 68 mounted to the rear axle 25 to transmit the rotational drive force of an engine to the rear axle; a one-end holding portion 75 for holding the one end 25a of the rear axle via a one-end bearing 71 in the axial direction of the rear axle 25; and a fastening member 73 for fastening the other-end bearing 72 to the other end 25b of the rear axle from the outside of the gear case 61.

## Claims

1. A motorcycle (10) in which a swing arm (18) is swingably mounted to a pivot shaft (17) provided in a body frame (15), a rear wheel (24) is mounted to a leading end of the swing arm (18), a drive shaft (44) for transmitting rotational drive force of an engine (16) is housed in the swing arm (18) and a final gear transmission mechanism (65) for transmitting the rotational drive force of the engine (16) is interposed between the drive shaft (44) and the rear wheel (24), wherein the final gear transmission mechanism (65) includes:
a gear case (61) mounted to the leading end of the swing arm (18) for supporting a rear axle (25) to transmit the rotational drive force of the engine (16) to the rear wheel (24);
a one-end bearing (71) and the other-end bearing (72) attached to the gear case (61) to support one end and the other end, respectively, of the rear axle (25);
a ring gear (68) mounted to the rear axle (25) to transmit the rotational drive force of the engine (16) to the rear axle (25); and
a holding portion (75) attached to the gear case (61) to hold the one end of the rear axle (25a) via the one-end bearing (71) in an axial direction of the rear axle (25),
**characterized in that**
the final gear transmission mechanism (65) further includes:
a fastening member (73) for fastening the other end of the rear axle (25b) via the other-end bearing (72) from the outside of the gear case (61); and
the other-end bearing (72) includes an inner race and an outer race and the inner race is fastened to the rear axle (25) by the fastening member (73),
wherein a brake disk (81) is attached to the one end of the rear axle (25a) in such a manner as to be gripped by the one end of the rear axle (25a) and the rear wheel (24).

2. The motorcycle (10) according to claim 1, wherein the gear case (61) is provided with the other-end holding portion (76) for holding the other end of the rear axle (25) via the other-end bearing (72) in the axial direction of the rear axle (25) and a lateral surface of the outer race is abutted against the other-end holding portion (76).

3. The motorcycle (10) according to claim 1 or 2, wherein a cap (77) attached to the gear case (61) covers the head of the fastening member (73).

## Patentansprüche

1. Kraftrad (10), bei dem ein Schwingenarm (18) schwenkbar an einer Schwenkwelle (17) angebracht ist, welche in einem Körperrahmen (15) vorgesehen ist, ein Hinterrad (24) an einem führenden Ende des Schwingenarms (18) angebracht ist, eine Antriebswelle (44) zur Übertragung einer Drehantriebskraft eines Motors (16) in dem Schwingenarm (18) untergebracht ist, und ein Endzahnradgetriebemechanismus (65) zur Übertragung der Drehantriebskraft des Motors (16) zwischen der Antriebswelle (44) und dem Hinterrad (24) angeordnet ist, wobei der Endzahnradgetriebemechanismus (65) umfasst:
ein Getriebegehäuse (61) welches an dem führenden Ende des Schwingenarms (18) angebracht ist, um eine Hinterachse (25) zu lagern, um die Drehantriebskraft des Motors (16) zu dem Hinterrad (24) zu übertragen;
ein Lager (71) für das eine Ende und ein Lager (72) für das andere Ende, welche jeweils an dem Getriebegehäuse (61) angebracht sind,
um jeweils das eine Ende und das andere Ende der Hinterachse (25) zu lagern;
einen Zahnkranz (68), welcher an der Hinterachse (25) angebracht ist, um die Drehantriebskraft des Motors (16) zu der Hinterachse (25) zu übertragen; und
einen Halteabschnitt (75), welcher an dem Getriebegehäuse (61) angebracht ist, um das eine Ende der Hinterachse (25a) über das Lager (71) für das eine Ende in einer axialen Richtung der Hinterachse (25) zu halten,
**dadurch gekennzeichnet, dass**
der Endzahnradgetriebemechanismus (65) ferner umfasst:
ein Befestigungselement (73), um das andere Ende der Hinterachse (25b) über das Lager (72) für das andere Ende von der Außenseite des Getriebegehäuses (61) zu befestigen; und
das Lager (72) für das andere Ende einen inneren Laufring und einen äußeren Laufring umfasst und der innere Laufring an der Hinterachse (25) durch das Befestigungselement (73) befestigt ist, wobei eine Bremsscheibe (81) an dem einen Ende von der Hinterachse (25a) in einer solchen Weise angebracht ist, dass sie von dem einen Ende von der Hinterachse (25a) und dem Hinterrad (24) festgeklemmt wird.

2. Kraftrad (10) nach Anspruch 1, wobei das Getriebegehäuse (61) mit einem Halteabschnitt (46) für das andere Ende versehen ist, um das andere Ende der Hinterachse (25) über das Lager (72) für das andere Ende in der Achsrichtung der Hinterachse (25) zu halten, und eine seitliche Fläche von dem äußeren Laufring an dem Halteabschnitt (76) für das andere Ende anliegt.

3. Kraftrad (10) nach Anspruch 1 oder 2, wobei eine an dem Getriebegehäuse (61) angebrachte Kappe (77) den Kopf des Befestigungselements (73) abdeckt.

## Revendications

1. Motocycle (10) dans lequel un bras oscillant (18) est monté de manière oscillante sur un arbre de pivot (17) prévu dans un châssis (15), un roue arrière (24) est montée sur une extrémité d'attaque du bras oscillant (18), un arbre d'entraînement (44) pour transmettre la force d'entraînement de rotation d'un moteur (16) est logé dans le bras oscillant (18) et un mécanisme de transmission d'engrenage final (65) pour transmettre la force d'entraînement de rotation du moteur (16) est intercalé entre l'arbre d'entraînement (44) et la roue arrière (24), dans laquelle le mécanisme de transmission d'engrenage final (65) comprend :
un carter d'engrenage (61) monté sur l'extrémité d'attaque du bras oscillant (18) pour supporter un essieu arrière (25) afin de transmettre la force d'entraînement de rotation du moteur (16) à la roue arrière (24) ;
un palier d'une première extrémité (71) et le palier de l'autre extrémité (72) fixés sur le carter d'engrenage (61) afin de supporter la première extrémité et l'autre extrémité, respectivement, de l'essieu arrière (25) ;
une couronne (68) montée sur l'essieu arrière (25) afin de transmettre la force d'entraînement de rotation du moteur (16) à l'essieu arrière (25) ; et
une partie de support (75) fixée sur le carter d'engrenage (61) afin de supporter la première extrémité de l'essieu arrière (25a) via le palier de la première extrémité (71) dans une direction axiale de l'essieu arrière (25),
**caractérisé en ce que** :
le mécanisme de transmission d'engrenage final (65) comprend en outre :
un élément de fixation (73) pour fixer l'autre extrémité de l'essieu arrière (25b) via le palier de l'autre extrémité (72) depuis l'extérieur du carter d'engrenage (61) ; et
le palier de l'autre extrémité (72) comprend un chemin de roulement interne et un chemin de roulement externe et le chemin de roulement interne est fixé à l'essieu arrière (25) par l'élément de fixation (73),
dans laquelle un disque de frein (81) est fixé sur la première extrémité de l'essieu arrière (25a) afin d'être saisi par la première extrémité de l'essieu arrière (25a) et la roue arrière (24).

2. Motocycle (10) selon la revendication 1, dans lequel le carter d'engrenage (61) est prévu avec la partie de support de l'autre extrémité (76) pour maintenir l'autre extrémité de l'essieu arrière (25) via le palier de l'autre extrémité (72) dans la direction axiale de l'essieu arrière (25) et une surface latérale du chemin de roulement externe vient en butée contre la partie de support de l'autre extrémité (76).

3. Motocycle (10) selon la revendication 1 ou 2, dans lequel un capuchon (77) fixé sur le carter d'engrenage (61) recouvre la tête de l'élément de fixation (73).
